Europäisches Patentamt

European Patent Office

Office européen des brevets

(11) Veröffentlichungsnummer: **0 275 373**
**A1**

## (12) EUROPÄISCHE PATENTANMELDUNG

(21) Anmeldenummer: 87115477.9

(22) Anmeldetag: 22.10.87

(51) Int. Cl.⁴ **B60H 3/06**

(30) Priorität: 19.12.86 DE 3643478

(43) Veröffentlichungstag der Anmeldung:
**27.07.88 Patentblatt 88/30**

(84) Benannte Vertragsstaaten:
**BE ES FR NL SE**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Berghorn, Hermann
Beethovenstrasse 6
D-8882 Lauingen(DE)**
Erfinder: **Damnjanovic, Milivoj
Donauwörtherstrasse 5
D-8880 Dillingen/Donau(DE)**

(54) **Luftfilterkasten für eine Fahrerkabine.**

(57) Die Erfindung betrifft eine Kabine (1) mit einem doppelwandigen Dachteil (3), welches zur Aufnahme einer Belüftungs-oder Klimaanlage (2) dient. Die Luftzuführung zur Belüftungsanlage erfolgt hierbei über eine Filtereinheit (5), welche aus einem Filterkasten (6) mit einem Filter (7) gebildet ist, wobei der Filterkasten (6) schwenkbar an einem über die Seitenwand (4) hinausragenden Dachteil (3) befestigt ist.

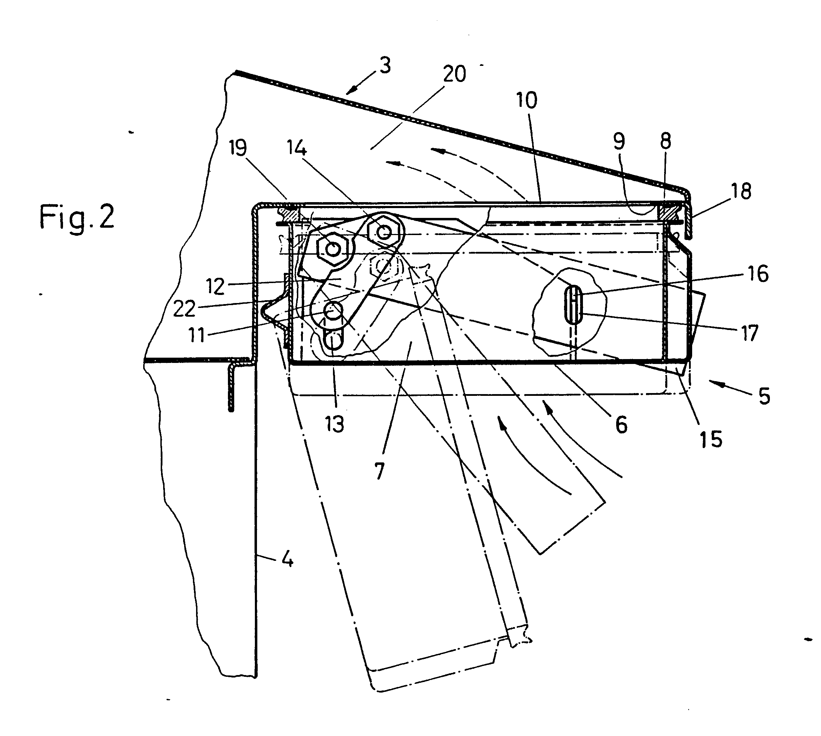

Nachteilig bei dieser Ausführung hat sich erwiesen, insbesondere bei Verwendung einer Lamellendichtung (8) daß beim Anpressen die Dichtung teilweise verschränkt wurde und somit Falschluft zur Belüftungsanlage gelangte. Es wurde deshalb vorgeschlagen, zwischen dem Anlenkpunkt (19) am Dachteil (3) und der Schwenkachse (11) des Filterkastens (6) ein Hebelgestänge (12,15) in Verbindung mit einem Führungsschlitz 13 am Dachteil 3 anzuordnen, wodurch eine teilweise parallele Verschiebung des Filterkastens und somit der Dichtung (8) ermöglicht wird. Durch die vorgeschlagene Anordnung wird außerdem auch die Zugänglichkeit erleichtert. (Fig.2)

Fig. 2

## Luftfilterkasten für eine Fahrerkabine

Die Erfindung betrifft eine Fahrerkabine mit einer Luftfiltereinheit nach dem Oberbegriff der Patentanspruches 1.

In der Praxis ist es erforderlich, daß derartige Luftfilter, die insbesondere im rauhen Feldbetrieb bei Erntemaschinen zum Einsatz kommen, öfters gereinigt und auch gewechselt werden müssen.

Aus der CA-PS 1 176 907 ist eine Anbringung einer derartigen Filteranlage bekannt, wobei der Filter in einem Filterkasten gelagert wird. Der Filterkasten ist dabei an einer seiner Längsseite - schwenkbar aufgehängt und in Längsrichtung nach vorne abklappbar.
In diese abgeklappte Stellung wird der Filterkasten zum Herausnehmen und Reinigen des Filters und zum Säubern des Filterkastens verschwenkt. Der Filter ist bei dieser Anordnung auf seiner der Eintrittsöffnung zugekehrten Seite mit einer umlaufenden Dichtung versehen.
Die Dichtung ist hierbei als Flachdichtung ausgebildet.
Zur besseren Abdichtung hat sich jedoch die Verwendung einer sogenannten Lippendichtung, mit einer zur Dichtfläche weisenden Dichtlippe, als vorteilhaft erwiesen.
Damit keine Falschluft, d.h. ungereinigte Luft der Klimaanlage zugeführt wird ist es erforderlich, daß die Dichtung exakt auf der Dichtflache der Lufteintrittsöffnung aufliegt.
Dies kann jedoch nur erreicht werden, wenn die Dichtung beim Anpressen nicht verformt wird, d.h. in eine Lage verschoben wird, wo die Abdichtung nicht mehr gewährleistet ist. Diese Gefahr tritt insbesondere bei der Verwendung einer Lippendichtung auf.
Wird, wie bei der vorgenannten Ausführung, der Filterkasten in Längsrichtung eingeschwenkt, so kann eine unerwünschte Verformung der Dichtung bei der Anlage an die Dichtfläche entstehen.

Bei der weiterhin bekannten US-PS 4 587 890 wird, zum Wechseln des Filters, der Filter seitlich in einer im Dachteil vorgesehenen Filterkammer herausgezogen, bzw. hineingeschoben. Die Dichtung ist hierbei direkt auf der Dichtfläche der Lufteintrittsöffnung befestigt.
Bei unsachgemäßen Einführen der Filter kann die feststehende Dichtung beschädigt werden. Außerdem sind bei Verwendung einer Lippendichtung die bereits angesprochenen Gefahren einer unerwünschten Verschiebung der Dichtlippe gegeben.

Der Erfindung liegt nunmehr die Aufgabe zugrunde, die Filtereinheit derart auszubilden, daß eine einwandfreie Anlage der Filterdichtung an die Dichtfläche der Lufteintrittsöffnung gewährleistet wird und zum Filterwechsel und zur Reinigung leicht zugänglich ist.

Diese Aufgabe wird durch die Merkmale des kennzeichnenden Teiles des Hauptanspruches gelöst.

Es wird weiter vorgeschlagen, daß der Stellhebel an seinem dem Anlenkpunkt abgewandten Ende mit einer Öffnung versehen ist, in welche beim Erreichen der Verriegelungsstellung ein am Dachbereich befestigter Riegel eingreift.
Dadurch wird eine einfach zu handhabende Verriegelung sichergestellt.

Die weiterhin vorgeschlagene Anbringung eines Führungselementes am Dachbereich parallel zum Führungsschlitz, welches sich in bezug auf den Verstellweg des Bolzens im Führungsschlitz zumindest teilweise im Schwenkbereich des Filterkastens befindet, ermöglicht eine selbsttätige Parallelführung des Filterkastens auf dem letzten Verstellweg bis die Dichtlippe der Dichtung zur Anlage kommt.

Damit die Filtereinheit beim Anpressen an die Dichtfläche seitlich besser fixiert und die Parallelführung verbessert wird, wird vorgeschlagen, in Längsrichtung des Filterkastens ein Führungsprofil anzubringen, wobei die Lagerstellen der Bolzen, in bezug auf den Querschnitt, außermittig angebracht ist und der schmalere Teil der Filtereinheit zur Seitenwand der Kabine ragt. Das Führungsprofil weist bei eingeschwenkter Filtereinheit einen geringen Abstand zur Seitenwand auf oder kann auch auf der Seitenwand aufliegen.

Die Verschwenkung des Filterkastens auf mindestens 45° und maximal 90° ermöglicht die gute Zugänglichkeit und verhindert ein ungewolltes Herausfallen des Filters beim Abklappen des Filterkastens.

Die Anordnung der Filtereinheit auf beiden Längsseiten der Kabine ergibt eine große Ansaugfläche, welche sich wiederum vorteilhaft auf die Ansauggeschwindigkeit der Luft auswirkt.

Weitere Vorteile sind anhand der nachfolgenden Beschreibung eines Ausführungsbeispieles und anhand der Zeichnungen zu entnehmen.
Es zeigen:
FIG.1 Eine schematische Seitenansicht einer Kabine mit einer Filtereinheit in eingeschwenktem Zustand.
FIG.2 Eine vergrößerte Schnittdarstellung A-B der Filtereinheit nach Fig.1.
FIG.3 Eine vergrößerte Darstellung der Filtereinheit nach Fig.1

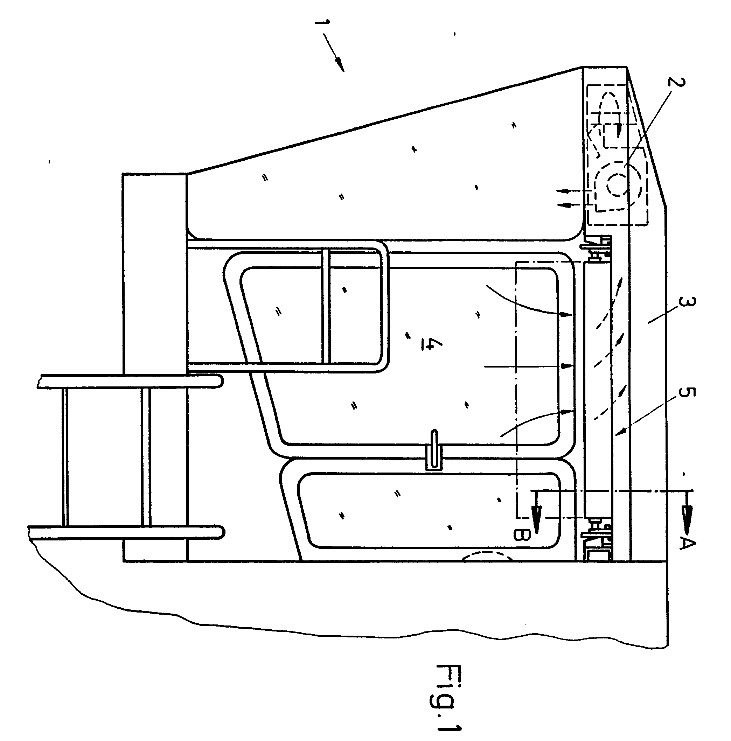

Fig.1 zeigt eine Fahrerkabine 1 mit einem doppelwandigen Dachteil 3 in welchem vorne eine Klimaanlage 2 integriert ist. Die Klimaanlage ist mit einem nicht näher aufgezeigten Verdampfer und mit Gebläsen versehen, welche die Außenluft durch eine Filtereinheit 5 ansaugen. Diese angesaugte Luft strömt durch den Filter 7 (Fig.2) und gelangt über die Lufteinlaßöffnung 10 in einen Luftkanal 20 des Dachteiles 3 und anschließend über den Verdampfer und dem Gebläse in das Kabineninnere.

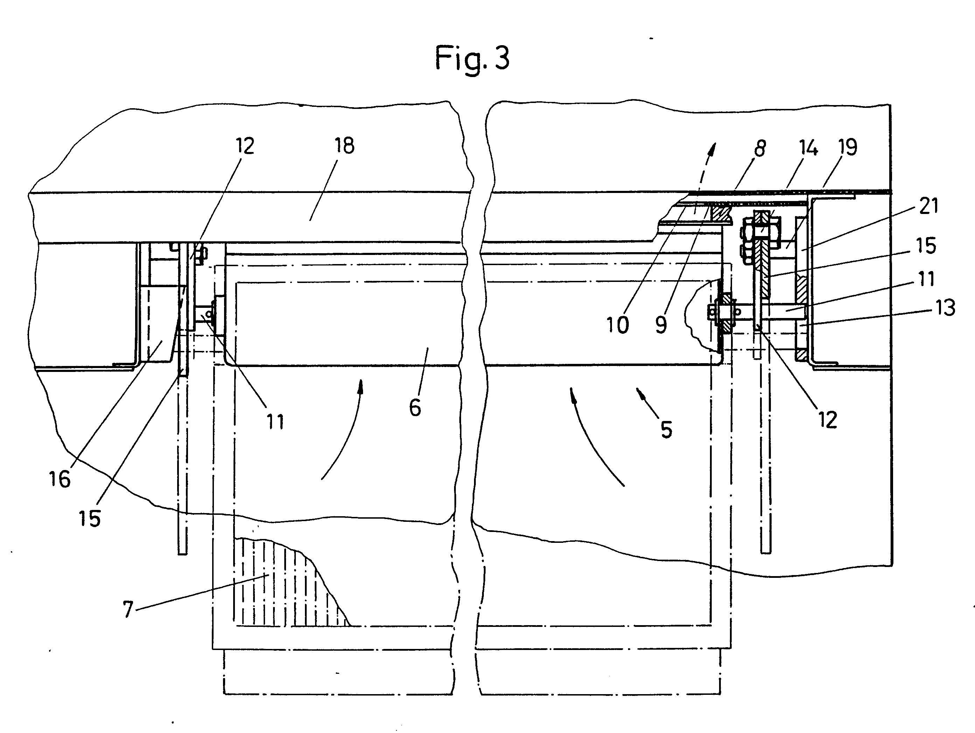

Die Filtereinheit (Fig.2, Fig.3) umfasst einen - schwenkbaren Filterkasten 6, welcher einen Filter 7 mit einer umlaufenden Dichtung 8 aufnimmt. Die Dichtung 8 ist in diesem Fall als Lamellendichtung ausgebildet und fest mit dem Filter 7 verbunden.

Der Filterkasten 6 ist nach unten mit nicht näher aufgezeigten Öffnungen versehen - im Regelfall mit einen Gitter.

Um die Bolzen 11 kann der Filterkasten 6 seine Schwenkbewegung nach unten durchführen, wobei die Bolzen 11 drehfest mit den Hebeln 12 verbunden sind.

Die Hebel 12 wiederum sind über ein Drehgelenk 14 jeweils mit einem Stellhebel 15 verbunden, wobei der Stellhebel über ein Bolzen 19 - schwenkbar am Dachteil 3 gelagert ist.

Das Dachteil 3 ist in diesem Bereich mit Konsolen 21 versehen worin die Bolzen 19 befestigt sind und ein Führungsschlitz 13 angebracht ist.

In diesen Führungsschlitz 13, welcher der Dichtfläche 9 senkrecht zugeordnet ist, ragt der über den Hebel 12 verlängerte Bolzen 11 und wird dadurch auf seiner Verstellbewegung geführt. Der Stellhebel 15 ist mit einer Öffnung 17 versehen, in welche in Verriegelungsstellung der am Dachteil 3 befestigte Riegel 16 eingreift.

Auf der Außenseite weist das Dachteil ein Führungselement 18 in Form eines Abkantes auf. Der Abkant 18 ist dabei parallel zum Führungsschlitz 13 ausgerichtet und ragt, wenn der Filterkasten 6 die in Fig. aufgezeigte obere gestrichelte Stellung erreicht hat, in dessen Verschwenkbereich. D.h. beim Erreichen der oberen gestichelten Stellung kann der Filterkasten 6 nicht mehr nach unten um den Bolzen 11 schwenken, da er mit seiner äußeren Kante an dem Abkant 18 ansteht.

Die restliche Verschwenkbewegung des Filterkastens 6 und somit auch des Filters 7 mit der Dichtung 8 verläuft bis zur Anlage an der Dichtfläche 9 parallel.

Dadurch wird ein exaktes Anpressen der Dichtung an die Dichtfläche gewährleistet, ohne daß die Gefahr besteht, daß sich die Dichtung verschränkt und somit eine Falschluftzufuhr ermöglicht.

Eine zusätzliche Stabilisierung der Parallelbewegung des Filterkastens 6 vor dem Aufsetzen der Dichtung das der Seitenwand 4 zugewandte auf dem Filterkasten 6 befestigte Hutprofil 22. Eine horizontale Verschiebung der Dichtung 8 wird dadurch bei Anpressvorgang vermieden.

In der unteren in Fig.2 gestrichelt gezeichneten Stellung des Filterkastens 6 wird der Filter 7 zum Austausch, bzw. zur Reinigung herausgenommen. In dieser Stellung kann auch der Filterkasten 6 gesäubert werden.

Damit der Filterkasten beim Abklappen nicht gegen die Seitenwand 4 schlägt, bzw. eine untere Stellung fixiert werden kann, kann ein hier nicht näher aufgezeigter Anschlag vorgesehen werden.

Die Funktionsweise dieser Filtereinheit ist wie folgt: Soll der Filter 7 zum Zwecke der Reinigung herausgenommen werden, so wird die Verriegelungsstellung durch seitliches Verschieben der Stellhebel 15 gelöst. Dadurch kommt die Öffnung 17 aus dem Bereich des Riegels 16 und ermöglicht ein Verschwenken des Stellhebels 15 um den Bolzen 19.

Auf dem ersten Verschwenkweg der Stellhebel 15 nach unten verschiebt sich der Filterkasten 6 in bezug auf die Dichtfläche 9 parallel nach unten.

Hat die obere Kante der Dichtung 8 die untere Kante des Abkantes 18 erreicht, so kann der Filterkasten um die Bolzen 11 nach unten schwenken. Während der parallelen Verstellung werden die Bolzen 11 in den seitlichen Führungsschlitzen 13 geführt.

Nach dem Abschwenken in die untere strichpunktiert gezeichnete Stellung kann der Filter 7 herausgenommen und gereinigt werden.

Nach dem Wiedereinsetzen des gereinigten Filters 7 wird von Hand der Filterkasten 6 in eine etwa horizontale Lage verschwenkt. Gleichzeitig verschwenkt man mit der anderen Hand einen der beiden Stellhebel 15 nach oben. Der nicht betätigte Stellhebel wird dabei durch die Verstellbewegung des Filterkastens ebenfalls mitgenommen.

Der Stellhebel 15 nimmt über das Drehgelenk 14 den Hebel 12 mit und dieser wiederum verschiebt den Bolzen 11, der im Führungsschlitz 13 nach oben wandert.

Hat die obere Kante der Dichtung 8 die untere Kante des Abkantes 18 überschritten, so ist die eine Hand der Bedienungsperson nicht mehr notwendig, um den Filterkasten in seiner horizontalen Lage zu halten, da der Filterkasten nunmehr nicht mehr nach unten verschwenken kann.

Ab dieser Stellung wird die weitere Verstellbewegung nur noch durch das weitere Verschenken der Stellhebel 15 nach oben durchgeführt. Diese Verstellung erfolgt in bezug auf die Dichtfläche 9 parallel ermöglicht daher eine exakte Anpressung der Dichtung.

In der obersten Stellung schnappt der Riegel 16 wieder in die Öffnung 17 der Stellhebel 15 ein und bildet somit ein Verriegelungsstellung.

Der Abkant 18 dient zusätzlich als Tropfkante und schützt die Filtereinheit vor Regenwasser.

Die im Beispiel gezeigte Anordnung ermöglicht eine gute Zugänglichkeit sowie ein einwandfreie Abdichtung des Luftkanals 20 gegenüber unerwünschter Falschluft.

## Ansprüche

1. Fahrerkabine, insbesondere für eine Erntemaschine, mit einem eine Belüftungs-oder Klimaanlage aufnehmenden doppelwandigen Dachteil, wobei die Luftzuführung über eine an einem über die Seitenwand der Kabine hinausragenden Dachbereich schwenkbar angeordnete Filtereinheit erfolgt, welche aus einem nach unten mit Öffnungen versehenen Filterkasten und einem im Filterkasten mit umlaufender Dichtung versehenen Filter besteht und in eingerastetem Zustand die Dichtung auf der Dichtfläche der Lufteintrittsöffnung aufliegt, dadurch gekennzeichnet, daß der Filterkasten (6) beidseitig, in dessen Längsrichtung gesehen, über jeweils einen mit einem Hebel (12) drehfest verbundenen Bolzen (11) - schwenkbar gelagert ist, wobei die Bolzen in bezug auf die Dichtfläche (9) über jeweils einen im Dachbereich (3) angeordneten Führungsschlitz (13) in senkrechter Richtung verschiebbar gelagert sind und die Hebel (12) über ein Drehgelenk (14) mit jeweils einem drehbar am Dachbereich (3) angelenkten Stellhebel (15) verbunden sind, welcher in eingeschwenktem Zustand eine Verriegelungsstellung einnimmt.

2. Fahrerkabine nach Anspruch 1, dadurch gekennzeichnet, daß der Stellhebel (15) an seinem dem Anlenkpunkt (19) abgewandten Ende mit einer Öffnung (17) versehen ist, in welche beim Erreichen der Verriegelungsstellung ein am Dachbereich (3) befestigter Riegel (16) eingreift.

3. Fahrerkabine nach Anspruch 1, dadurch gekennzeichnet, daß parallel zum Führungsschlitz (13) ein am Dachbereich (3) angeordnetes Führungselement (18) befestigt ist, welches sich in bezug auf den Verstellweg des Bolzens (11) im Führungsschlitz (13) zumindest teilweise im Schwenkbereich des Filterkastens (6) befindet.

4. Fahrerkabine nach Anspruch 3, dadurch gekennzeichnet, daß die Lagerstellen der Bolzen (11) am Filterkasten (6), in horizontaler Richtung und quer zur Längsrichtung der eingeschwenkten Filtereinheit (5) betrachtet, außermittig angeordnet sind, wobei in bezug auf die Bolzen (11) der schmalere Teil des Filterkastens zur Seitenwand ragt und der Filterkasten auf dieser Seite mit einem in Längsrichtung angebrachten Führungsprofil (22) versehen ist, welches einen geringen Abstand zur Seitenwand (4) aufweist und das am Dachbereich angebrachte Führungselement (18) mit dem größeren Teil des Filterkastens (6) zusammenwirkt.

5. Fahrerkabine nach einem der vorherigen Ansprüche, dadurch gekennzeichnet, daß der mögliche Verschwenkwinkel der Filtereinheit (5) mindestens 45° beträgt.

6. Fahrerkabine nach einem der vorhergehenden Ansprüche, dadurch gekennzeichnt, daß der Verschwenkwinkel der Filtereinheit (5) auf maximal 90° durch einen Anschlag beschränkt ist.

7. Fahrerkabine nach einem der vorhergehenden Ansprüche, dadurch gekennzeichnet, daß die Filtereinheit (5) zumindest teilweise an beiden Längsseiten der Kabine (1), bzw. des Dachbereiches (3) angeordnet ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-B-1 673 215 (FOKKER) * Spalte 1, Zeilen 26-41; Spalte 2, Zeilen 3-41; Figuren 1,2 * | 1 | B 60 H 3/06 |
| A | --- | 4 | |
| Y,D | CA-A-1 176 907 (ALLIS-CHALMERS CORP.) * Seite 4, Zeilen 15-24; Figuren 1,2,5 * | 1 | |
| A | --- | 5-7 | |
| A | FR-A-2 396 580 (ETAT FRANCAIS) * Seite 3, Zeilen 10-17; Seite 4, Zeilen 16-19; Figuren 1,2,5,6 * | 1 | |
| A | US-A-3 593 503 (P. ANDREWS) * Spalte 1, Zeile 49 - Spalte 2, Zeile 47; Figuren 3-7 * | 1 | |
| A | US-A-3 868 896 (R. DOLL) * Spalte 2, Zeilen 10-31; Figuren 1-5,8,9 * | 1,7 | RECHERCHIERTE SACHGEBIETE (Int. Cl.4) |
| A | FR-A-2 306 357 (MASSEY-FERGUSON) * Seite 3, Zeilen 6-15; Figuren 1-3 * | 1 | B 60 H F 24 F |
| A | GB-A-1 165 751 (VOKES LTD) * Seite 2, Zeilen 38-59; Figuren 1,2 * | 1 | B 01 D |

Der vorliegende Recherchenbericht wurde für alle Patentansprüche erstellt

| Recherchenort | Abschlußdatum der Recherche | Prüfer |
|---|---|---|
| DEN HAAG | 28-03-1988 | CZAJKOWSKI A.R. |